# EUROPÄISCHE PATENTSCHRIFT

(11) **EP 4 063 695 B1**
(45) Veröffentlichungstag und Bekanntmachung des Hinweises auf die Patenterteilung: **29.05.2024**
(21) Anmeldenummer: 22161340.9
(22) Anmeldetag: 10.03.2022
(51) Int. Cl.: F16H 57/04, F16H 57/02

(54) **ANTRIEBSANORDNUNG FÜR EIN KRAFTFAHRZEUG**
DRIVE ASSEMBLY FOR A MOTOR VEHICLE
DISPOSITIF D'ENTRAINEMENT POUR UN VÉHICULE AUTOMOBILE

(30) Priorität: 23.03.2021 DE 102021202836
(43) Veröffentlichungstag der Anmeldung: 28.09.2022
(73) Patentinhaber: VOLKSWAGEN AG, 38440 Wolfsburg (DE)
(72) Erfinder: Gorges, Sebastian, 59964 Medebach-Dreislar (DE); Hensel, Roman, 34582 Borken (DE); Kolze, Fabian, 39179 Barleben (DE); Rau, Dr. Thomas, 34329 Nieste (DE)

(56) Entgegenhaltungen:
- DE-A1-102011 076 527
- DE-A1-102018 111 418
- DE-A1-102018 117 939
- JP-A- 2004 248 402

## Beschreibung

Die Erfindung betrifft eine Antriebsanordnung für ein Kraftfahrzeug, umfassend
- ein Gehäuse mit einem Motorraum und einem an den Motorraum angrenzenden, über eine innere Stirnwand von diesem abgegrenzten Getrieberaum, jeweils begrenzt durch besagte innere Stirnwand, eine zugeordnete äußere Stirnwand und eine sich in axialer Richtung zwischen der inneren und der zugeordneten äußeren Stirnwand erstreckende Mantelwand,
- eine in dem Motorraum angeordnete elektrische Maschine mit einem gehäusefesten Stator und einem radial innerhalb des Stators angeordneten Rotor mit einer die innere Stirnwand durchsetzenden, im Motorraum drehbar gelagerten Rotorwelle,
- ein in dem Getrieberaum angeordnetes Getriebe mit einem auf der hier als Antriebswelle wirkenden Rotorwelle fixierten Eingangsritzel und einem mit einem Abtrieb verbindbaren oder verbundenen Ausgangsrad und
- ein Ölreservoir, aus dem Öl über ein Ölzuleitsystem zwecks Kühlung zu der elektrischen Maschine, insbesondere zur Rotorwelle, und über ein Ölableitsystem von dieser zurück in das Ölreservoir leitbar ist,
wobei die Mantelwand des Motorraums zur zusätzlichen Kühlung der elektrischen Maschine einen den Stator entlang dessen Umfangs umlaufenden Kühlwassermantel aufweist und wobei zumindest ein Teil des Ölreservoirs als ein unterhalb des Motorraumes angeordneter Ölraum ausgebildet ist, dessen Oberseite thermisch mit dem Kühlwassermantel gekoppelt ist und in den stirnwandnahen, axialen Endbereichen des Motorraumes je ein in den Ölraum mündender Motorraum-Ablauf angeordnet ist.

Eine derartige Antriebsanordnung ist bekannt aus der DE 10 2011 076 527 A1.

Die JP 2012-105457 A offenbart einen elektrischen Antrieb für ein Kraftfahrzeug, der als eine kompakte Antriebsanordnung ausgebildet ist, welche einerseits das eigentliche Antriebsaggregat und andererseits ein Getriebe zur Übersetzung und Verteilung des von der elektrischen Maschine gelieferten Momentes umfasst. Beide Einheiten sind in einem gemeinsamen Gehäuse angeordnet, welches jedoch aufgrund der unterschiedlichen Anforderungen der einzelnen Einheiten in im Wesentlichen getrennte Räume, nämlich einen Motorraum und einem Getrieberaum, unterteilt ist. Beide Räume werden von einer gemeinsamen Welle durchsetzt, die im Motorraum als Rotorwelle und im Getrieberaum als Getriebeeingangswelle wirkt. Dies bedeutet, dass Motorraum und Getrieberaum in axialer Richtung benachbart zueinander angeordnet sind und sich eine gemeinsame Stirnwand, die hier als innere Stirnwand bezeichnet wird, teilen. Auf der axial jeweils anderen, gegenüberliegenden Seite ist jeder Raum von einer weiteren, hier jeweils als äußere Stirnwand bezeichneten Stirnwand begrenzt. Zwischen der (gemeinsamen) inneren Stirnwand und jeder äußeren Stirnwand erstreckt sich in axialer Richtung eine jeweils zugeordnete Mantelwand.

Der Fachmann wird verstehen, dass sich Begriffe, die allgemeine Relativausrichtungen oder Positionierungen bezeichnen, wie "neben", "unter", "über" etc., sofern nichts anderes gesagt ist, stets auf die Montageendlage der Antriebsanordnung im Kraftfahrzeug beziehen. Entsprechendes gilt für absolute Ausrichtungsangeben wie z. B. "vertikal" und "horizontal". Symmetriespezifische Begriffe wie "axial", "radial" etc. sind stets im Kontext der jeweils beschriebenen Symmetrieeinheit zu verstehen.

Bei leistungsstarken elektrischen Antriebsanordnungen hat es sich durchgesetzt, anfallende Abwärme, wie in der genannten Druckschrift offenbart, über zwei stofflich und räumlich separate Kühlsysteme abzuführen, nämlich über ein wasserbasiertes Kühlsystem und ein ölbasiertes Kühlsystem, wobei letzterem meist die zusätzliche Funktion einer Schmierung beweglicher Teile zukommt. Die Wasserkühlung der typischerweise als Innenläufermaschinen ausgebildeten elektrischen Maschine ist als Statorkühlung in Form eines Kühlwassermantels ausgebildet. Bei einem Kühlwassermantel handelt es sich um ein in die Mantelwand des Motorraums integriertes Kühlwasser-Leitungssystem, welches den Stator umläuft. Es kann die Form einer spiraligen Kühlschlange haben; in der genannten Druckschrift sind jedoch zur Querschnittsvergrößerung lang erstreckte Flachkanäle in die Motorraum-Mantelwand integriert. Das ölbasierte Kühlsystem umfasst bei der in der genannten Druckschrift offenbarten Anordnung ein Ölreservoir, welches als ein Ölsumpf ausgebildet ist, der sich über die unteren Bereiche des Getrieberaums und des Motorraums erstreckt, welche über einen Überlauf miteinander verbunden sind. In den im unteren Bereich des Getrieberaums angeordneten Getriebeölsumpf ragt ein Ausgangsrad des Getriebes hinein, sodass das Öl im Getriebeölsumpf bei Rotation des Ausgangsrades ständig verwirbelt wird und zudem die Verzahnung des Ausgangsrades benetzt. Aus diesem Getriebeölsumpf wird zudem mittels einer Ölpumpe Öl abgezogen und über ein stehendes, zur hohlen Rotorwelle koaxiales und mit deren Innenwandung einen Ringspalt bildendes Rohr in diesen Ringspalt gepumpt, um eine Innenkühlung des Rotors zu erzeugen. An ihren axialen Enden ist die Rotorwelle offen, sodass das aus der Rotorwelle wieder austretende Öl einerseits direkt in den Getriebeölsumpf zurückläuft und andererseits auf dem Umweg über einen dem Motorraum auf der getriebeabgewandten Seite axial benachbarten Deckelraum zurück in einen Motorölsumpf im unteren Bereich des Motorraums läuft. Dort umspült und kühlt es den unteren Bereich des Stators. Zur Kühlung auch des oberen Bereichs des Stators sind entsprechende Durchbrechungen des oberen Bereichs der Motorraum-Mantelwand vorgesehen, durch welches Öl auf den oberen Statorbereich, insbesondere auf die Wickelköpfe, gepumpt wird und sich dann ebenfalls im Motorölsumpf sammelt. Beide Kühlsysteme sind thermisch miteinander gekoppelt. So ist der Kühlwassermantel über ein Leitungssystem mit einem Wasser/Öl-Wärmetauscher im Getriebeölsumpf verbunden ist.

Die bekannte Anordnung weist mehrere Nachteile auf. Zum einen ist die thermische Kopplung der beiden Kühlsysteme über den Wärmetauscher im Getriebeölsumpf ungünstig. Der Wärmetauscher beansprucht erheblichen Bauraum im notorisch engen Getrieberaum. Zudem verlangt die fluidische Verbindung mit dem Kühlwassermantel eine komplizierte Leitungsverlegung. Weiter ist der gemeinsame, sich über Getrieberaum und Motorraum erstreckende und mit einem Überlauf in Richtung Motorraum versehene Ölsumpf nachteilig und begünstigt einerseits die Gefahr einer Verölung des Luftspaltes zwischen dem Rotor und dem Stator der elektrischen Maschine, was zu deutlichen Leistungseinbußen führen kann, und andererseits die Gefahr eines Trockenfallens des Getrieberaums bei hohen Kühlungsanforderungen der elektrischen Maschine und entsprechend starkem Betrieb der Ölpumpe.

In DE 10 2018 111 418 A1 werden diese Probleme jedenfalls teilweise dadurch gelöst, dass die Ölkühlung in Form eines den Kühlwassermantel koaxial und vollumfänglich umgebenden Kühlölmantels ausgebildet ist. Das Öl wird mittels einer Ölpumpe aktiv um den Wassermantel und damit um den Motorraum herumgeführt, tritt in einem abgedichteten Lagerraum in das getriebeabgewandte Ende der Rotorwelle ein und im Getrieberaum wieder aus der Getriebeeingangswelle aus. Der Motorraum ist somit vollständig trocken. Die Kühlung der elektrischen Maschine erfolgt daher allein über den Kühlwassermantel. Dies kann bei leistungsstärkeren Maschinen unzureichend sein. Außerdem ist diese Antriebsanordnung auf einen pumpengetriebenen Ölfluss angewiesen.

Auch die JP 2004 248 402 A offenbart einen trockenen Motorraum. Hier ist jedoch ein wannenartig unter dem Kühlwassermantel angebrachten Ölraum vorgesehen, der von einem rohrförmigen, mit dem Kühlwassermantel verbundenen Waser/Öl-Wärmetauscher durchsetzt ist.

Aus der eingangs genannten, gattungsbildenden DE 10 2011 076 527 A1 ist es bekannt, ebenfalls lediglich unterhalb des Wassermantels einen wannenförmigen Ölraum anzulegen, durch den hindurch aus der Rotorwelle austretendes Öl zurück in den Ölsumpf des Getrieberaums geleitet wird und dabei thermisch mit dem Kühlwassermantel wechselwirkt. Der Ölraum ist mit dem Motorraum verbunden, sodass Öl zur direkten Kühlung der elektrischen Maschine eingesetzt werden kann. Bei starkem Ölfluss kann es jedoch zu einem übermäßigen Anstieg des Ölpegels im Motorraum und somit zu einer Verölung des Luftspaltes zwischen Rotor und Stator der elektrischen Maschine kommen.

Ebenso offenbaren die DE 10 2018 117 939 A1 und die DE10 2016 204 980 A1 einen wannenartig unter dem Kühlwassermantel angebrachten Ölraum,
Es ist die Aufgabe der vorliegenden Erfindung, eine gattungsgemäße Antriebsanordnung derart weiterzubilden, dass bei vergleichbar guter Kühlung der elektrischen ein verbesserter Schutz gegen Luftspaltverölung gegeben ist.

Diese Aufgabe wird in Verbindung mit den Merkmalen des Oberbegriffs von Anspruch 1 dadurch gelöst, dass der Ölraum als ein Labyrinthraum ausgebildet ist und axial benachbart zur äußeren Stirnwand des Motorraums ein Deckelraum angeordnet ist, der über einen Labyrinthraum-Überlauf mit dem Labyrinthraum verbunden ist,
wobei sich in der äußeren Motorraum-Stirnwand ein Motorraum-Überlauf befindet, über den Öl aus dem Motorraum in den Deckelraum gelangen kann und der höher angeordnet ist als die Motorraum-Abläufe.

Bevorzugte Ausführungsformen der Erfindung sind Gegenstand der abhängigen Patentansprüche.

Als ein zentrales Element sieht die Erfindung die Schaffung eines abgegrenzten Raumes unterhalb des Motorraumes vor. Dieser hier als Labyrinthraum bezeichnete Raum ist Bestandteil des Ölreservoirs, in welches Öl, das im Bereich der Rotorwelle und/oder des Stators seine Kühlaufgabe erfüllt hat, zurückgeleitet wird, um von hier aus unter - je nach Ausführungsform - vollständiger oder teilweiser Rückführung über den Getriebeölsumpf einen neuen Kühlzyklus zu durchlaufen. Dieser neu geschaffene Raum wird als Labyrinthraum bezeichnet, weil er Ölleitelemente enthält, die das den Labyrinthraum durchströmende Öl zu einer mäandrierenden Bewegung zwingen. Das Öl verbleibt also vergleichsweise lange im Labyrinthraum, sodass es entsprechend lange mit thermisch gekoppelten Elementen wechselwirken kann.

Ein wesentliches thermisch angekoppeltes Element ist der in die Motorraum-Mantelwand integrierte und daher oberhalb des Labyrinthraums zwischen diesem und dem Motorraum gelegene Kühlwassermantel. An ihn kann das Öl im Labyrinthraum Wärme über die Labyrinthraum-Oberseite abgeben. Zugleich besteht, da die Unterseite des Labyrinthraums auch eine Außenwandung des Gehäuses darstellt, eine thermische Kopplung zur Umgebung, insbesondere zu der das Gehäuse umströmenden Umgebungsluft. Auch an diese kann also das im Labyrinthraum befindliche Öl Wärme abgeben. Mit anderen Worten wird also die thermische Kopplung zwischen dem ölbasierten und dem wasserbasierten Kühlsystem ohne einen bauraumintensiven Wärmetauscher im Getriebeölsumpf und ohne die diesen mit dem Kühlwassermantel verbindenden Leitungen realisiert. Zugleich wird der Wärmeeintrag in das wasserbasierte Kühlsystem reduziert, da mit der thermischen Ankopplung des Labyrinthraumes an die Umgebung ein zusätzlicher Wärmeableitungspfad zur Verfügung gestellt wird. Und schließlich bietet die Ölrückführung unterhalb des Motorraums die Möglichkeit auf einen Motorölsumpf zu verzichten, was die Gefahr einer Verölung des Luftspaltes der elektrischen Maschine deutlich reduziert.

Weiter sieht die Erfindung vor, dass sich axial benachbart zur äußeren Stirnseite des Motorraums ein Deckelraum anschließt, dessen Aufgabe es primär ist, durch die äußere Stirnwand dringendes Öl aufzufangen. Insbesondere wird es nur schwer möglich sein, eine Beölung des Rotorwellenlagers in der äußeren Motorraum-Stirnwand sicherzustellen, ohne dass Öl durch das Lager nach außerhalb des Motorraums tritt. Dieses Öl kann im Deckelraum aufgefangen und wieder in den Ölkreislauf rückgeführt werden. Insbesondere ist erfindungsgemäß vorgesehen, dass die äußere Motorraum-Stirnwand einen Motorraum-Überlauf aufweist, über den Öl aus dem Motorraum in den Deckelraum gelangen kann. Der Deckelraum ist über einen Labyrinthraum-Überlauf mit dem Öl-Reservoir, insbesondere dem Labyrinthraum oder einem dem Labyrinthraum nachgelagerten Vorraum, z.B. dem Saugraum einer Ölpumpe, verbunden. Bei einem im Hinblick auf eine Luftspaltverölung gefährlichen Anstieg des Ölpegels kann über besagten Motorraum-Überlauf Öl aus dem Motorraum abfließen.

Zur Verbesserung der thermischen Ankopplung zwischen dem Kühlwassermantel und dem Labyrinthraum kann bei einer Weiterbildung der Erfindung vorgesehen sein, dass die Außenseite der Motorraum-Mantelwand im Grenzbereich zum Labyrinthraum in den Labyrinthraum hineinragende, umströmbare Kühlrippen aufweist. Diese vergrößern die Kontaktfläche zwischen dem Öl im Labyrinthraum und der Wand des Kühlwassermantels. Bei den Kühlrippen kann es sich um diejenigen Ölleitelemente handeln, die im Labyrinthraum für die mäandrierende Bewegung des Öls sorgen; alternativ kann es sich bei den Kühlrippen um zu anderen Ölleitelementen zusätzliche Strukturen handeln. Beispielsweise können die Ölleitelemente auch als vom Labyrinthraumboden aufragende Kühlrippen ausgebildet sein, die die thermische Ankopplung an die Umgebungsluft verbessern. Zur Verbesserung der Kühlwirkung können auch anders geformte Strukturen, wie z.B. Pins o.Ä. vorgesehen sein.

Wie aus dem Stand der Technik grundsätzlich bekannt, ist auch im Rahmen der Erfindung bevorzugt vorgesehen, dass die Rotorwelle hohl ausgebildet ist und das Öl über das Ölzuleitsystem in die hohle Rotorwelle hinein und über das Ölableitsystem aus der hohlen Rotorwelle in das Ölreservoir, insbesondere den Labyrinthraum, leitbar ist. Dabei ist bevorzugt vorgesehen, dass die hohle Rotorwelle in ihren stirnwandnahen, axialen Endbereichen innerhalb des Motorraums Radialöffnungen aufweist, durch die hindurch bei Rotation des Rotors Öl aus dem hohlen Inneren der Rotorwelle in die axialen Endbereiche des Stators schleuderbar ist. Dieselbe Wirkung wird mit Axialöffnungen erreicht, sofern zwischen der Öffnung und der Wandung des Motorraum ein hinreichender Abstand besteht. Anders als beim Stand der Technik läuft das in die hohle Rotorwelle hinein geförderte Öl also in jedem Fall nicht im Wesentlichen in die dem Motorraum benachbarten Räume ab, sondern strömt in den Motorraum und zwar in Form eines zentrifugalkraftgetriebenen Spritzstrahls, der nach außen auf die axialen Statorenden, insbesondere die dort angeordneten Wickelköpfe, gerichtet ist. Damit können besonders kühlungsbedürftige Bereiche des Stators gezielt mit einem großen Ölvolumen benetzt werden. Diese Statorbereiche erfahren nämlich aufgrund des Fehlens einer direkten thermischen Kopplung nur eine geringe Kühlung durch den Kühlwassermantel; eine Sumpf- bzw. Tropf-Benetzung, wie aus dem Stand der Technik bekannt, ist hingegen zum einen ungleichmäßig über den Stator verteilt und zum anderen stark volumenbeschränkt.

Um gerade bei hohem Schleudervolumen die Ausbildung eines Motorölsumpfes mit der Gefahr einer Luftspalt-Verölung zu verhindern, ist bevorzugt vorgesehen, dass der Motorraum in seinen stirnwandnahen, axialen Endbereichen je einen (direkt oder indirekt) in den Labyrinthraum mündenden Motorraum-Ablauf aufweist. Das in die axialen Endbereiche des Stators geschleuderte Öl kann nach Erfüllung seiner Kühlungsaufgabe also direkt in den unter dem Motorraum liegenden Labyrinthraum abgeleitet werden, sodass sich im Motorraum kein störender Ölpegel ausbilden kann. Um ganz sicher zu gehen, dass auch bei Ölstau im Labyrinthraum keine Ausbildung eines Motorölsumpfes im Motorraum droht, kann bei einer Weiterbildung der Erfindung vorgesehen sein, dass der Motorraum einen die innere Stirnwand durchsetzenden Motorraum-Überlauf zum Getriebeölsumpf aufweist, der höher angeordnet ist als die Motorraum-Abläufe (und selbstverständlich unterhalb des Luftspaltes der elektrischen Maschine liegt).

Bezüglich der Ölströmung im Labyrinthraum sind unterschiedliche Ansätze denkbar. Bei einem ersten Ansatz ist vorgesehen, dass die beiden Motorraum-Abläufe in einer gemeinsamen Labyrinthraum-Kammer, die insbesondere die einzige Labyrinthraum-Kammer sein kann, münden. Diese gemeinsame Labyrinthraum-Kammer erstreckt sich über die gesamte axiale Länge des Motorraums, unter welchem sie angeordnet ist. Die beiden an den axialen Enden des Motorraums angeordneten Motorraum-Überläufe entlassen das Öl aus dem Motorraum also an zwei einander gegenüberliegenden, axialen Enden der Labyrinthraum-Kammer in diese hinein. Die Ölströme aus den beiden Motorraum-Abläufen mischen sich also in der Labyrinthraum-Kammer und suchen gemeinsam ihren Weg zum Ausgang des Labyrinthraumes, auf dessen Ausgestaltung weiter unten noch näher eingegangen werden soll. Dies stellt die technisch einfachere Variante dar.

Bei großem Ölvolumenstrom und sehr flacher Ausgestaltung des Labyrinthraumes ist es jedoch theoretisch denkbar, dass der Zusammenfluss beider Ölströme zu einem Ölstau im Labyrinthraum führt, der sich im ungünstigsten Fall in den Motorraum fortsetzt. Bei Ausführungsformen in denen dort kein Motorraum-Überlauf zum Getriebeölsumpf vorhanden ist, kann ein solcher Stau zum Anstieg des Ölpegels im Motorraum bis zum Luftspalt der elektrischen Maschine führen, der dann in nachteiliger Weise verölt wird. Um dieses Szenario vollständig auszuschließen, ist bei einem zweiten Ansatz vorgesehen, dass der Labyrinthraum zwei getrennte Labyrinthraum-Kammern aufweist, in die je einer der beiden Motorraum-Abläufe mündet. Die beiden Ölströme werden also auf getrennten Wegen zum Ausgang des Labyrinthraums geführt, sodass bei angemessener Auslegung der einzelnen Ölpfade ein Stau im Labyrinthraum ausgeschlossen ist. Der Ölpfad auf der getriebeabgewandten Seite des Motorraums kann dabei auf einem Umweg durch den sich hier axial an den Motorraum anschließenden Deckelraum geführt werden.

Als Ausgang des Labyrinthraums ist bevorzugt ein Überlauf zum Getriebeölsumpf vorgesehen. Alternativ oder zusätzlich kann vorgesehen sein, dass jede Labyrinthraum-Kammer fluidisch mit einem (im Falle mehrerer Labyrinthraum-Kammern gemeinsamen) Saugraum einer Ölpumpe verbunden ist. Bei Ausführungsformen, in denen eine aktive Öl-Umwälzung mittels einer Ölpumpe vorgesehen ist, stellt ein separater Saugraum, der mit dem Labyrinthraum verbunden ist, eine bessere Ölabzugsstelle für eine Ölpumpe dar als der Getriebeölsumpf im Getrieberaum. Auf diese Weise wird nämlich zuverlässig verhindert, dass die Ölpumpe den Pegel im Getriebeölsumpf zu weit absenkt und dadurch eine ausreichende Getriebeschmierung verhindert. Umgekehrt sollte auch, beispielsweise bei Inaktivität der Pumpe, ein Ölstau im Saugraum, der sich gegebenenfalls in den Labyrinthraum fortsetzt, verhindert werden. Daher ist bei einer Weiterbildung dieser Ausführungsform vorgesehen, dass (auch) der Saugraum über einen Überlauf, nämlich den Saugraum-Überlauf, mit dem Getriebeölsumpf verbunden ist.

Weitere Einzelheiten und Vorteile der Erfindung ergeben sich aus der nachfolgenden, speziellen Beschreibung und den Zeichnungen.

Es zeigen:
- Figur 1:: einen stark schematisierten Längsschnitt durch eine bevorzugte Ausführungsform einer nicht erfindungsgemäßen Antriebsanordnung,
- Figur 2:: eine Schnittdarstellung gemäß Schnittlinie II-II in Figur 1,
- Figur 3:: eine Schnittdarstellung gemäß Schnittlinie III-III in Figur 1,
- Figur 4:: eine Schnittdarstellung analog Figur 3 durch ebenfalls nicht erfindungsgemäße Ausführungsform,
- Figur 5:: eine zu Figur 1 analoge Schnittdarstellung durch eine erfindungsgemäße Ausführungsform,
- Figur 6:: eine Schnittdarstellung gemäß Schnittlinie VI-VI in Figur 5,
- Figur 7:: eine teilweise geschnittene Darstellung einer alternativen, erfindungsgemäßen Ausführungsform,
- Figur 8:: eine Schnittdarstellung gemäß Schnittlinie VIII-VIII in Figur 7,
- Figur 9:: eine schematische Darstellung des Ölbehälters zur Veranschaulichung seiner Position im Getriebe,
- Figur 10:: eine Schnittdarstellung des Ölbehälters von Figur 9 mit eingezeichnetem Starkström ungsweg,
- Figur 11:: eine Schnittdarstellung des Ölbehälters von Figur 9 mit eingezeichnetem Schwachströmungsweg sowie
- Figur 12:: eine umgekehrte Schnittdarstellung des Ölbehälters von Figur 9.

Gleiche Bezugszeichen in den Figuren weisen auf gleiche oder analoge Elemente hin.

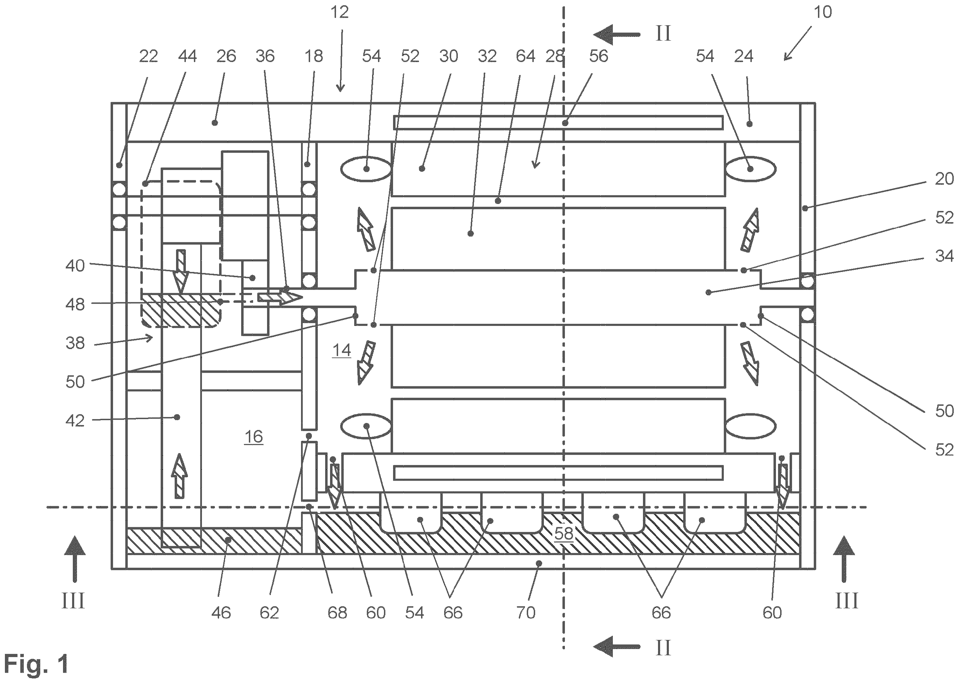

Figur 1 zeigt in stark schematisierter Darstellung einen Längsschnitt durch eine Ausführungsform einer nicht erfindungsgemäßen Antriebsanordnung 10. Die Antriebsanordnung 10 umfasst ein Gehäuse 12, welches in einen Motorraum 14 und einen Getrieberaum 16 unterteilt ist. Der Motorraum 14 und der Getrieberaum 16 sind einander axial benachbart angeordnet. Sie sind durch eine hier als innere Stirnwand 18 bezeichnete Zwischenwand voneinander getrennt. Der inneren Stirnwand 18 in axialer Richtung gegenüberliegend ist der Motorraum 14 durch eine äußere (Motorraum-)Stirnwand 20 und der Getrieberaum 16 durch eine äußere (Getrieberaum-)Stirnwand 22 begrenzt. In radialer Richtung ist der Motorraum 14 durch eine (Motorraum-)Mantelwand 24 und der Getrieberaum 16 durch eine (Getrieberaum-)Mantelwand 26 begrenzt.

Im Motorraum 14 ist eine elektrische Maschine 28 mit einem gehäusefesten Stator 30 und einem innerhalb des Stators 30 rotierbaren Rotor 32 angeordnet. Der Rotor 32 weist eine Rotorwelle 34 auf, die einerseits in der inneren Stirnwand 18 und andererseits in der äußeren Motorraum-Stirnwand 20 gelagert ist. Die Rotorwelle 34 ist - zumindest in ihrem zentralen Bereich - hohl ausgebildet. Die Rotorwelle 34 durchsetzt dabei die innere Stirnwand 18, um als Antriebswelle 36 in den Getrieberaum 16 zu ragen. Alternativ ist es auch möglich, dass die Antriebswelle 36 eine gesonderte, koaxial mit der Rotorwelle 34 verbundene Welle ist.

Im Getrieberaum 16 ist ein Getriebe 38, insbesondere ein Übersetzungsgetriebe angeordnet. Als Eingangsrad des Getriebes 38 wirkt ein Antriebsritzel 40, welches drehfest auf der Antriebswelle 36 fixiert ist. Der Begriff des Ritzels ist weit zu verstehen und umfasst sowohl ein auf ein Welle aufgestecktes Rad als auch eine einstückig mit der Welle ausgebildete Verzahnung. Dieses steht über mehrere Verzahnungsstufen mit einem Ausgangsrad 42 in drehmomentübertragender Verbindung. Das Ausgangsrad 42 ist in nicht näher dargestellter Weise mit einem Abtrieb, insbesondere einem Differenzialgetriebe gekoppelt.

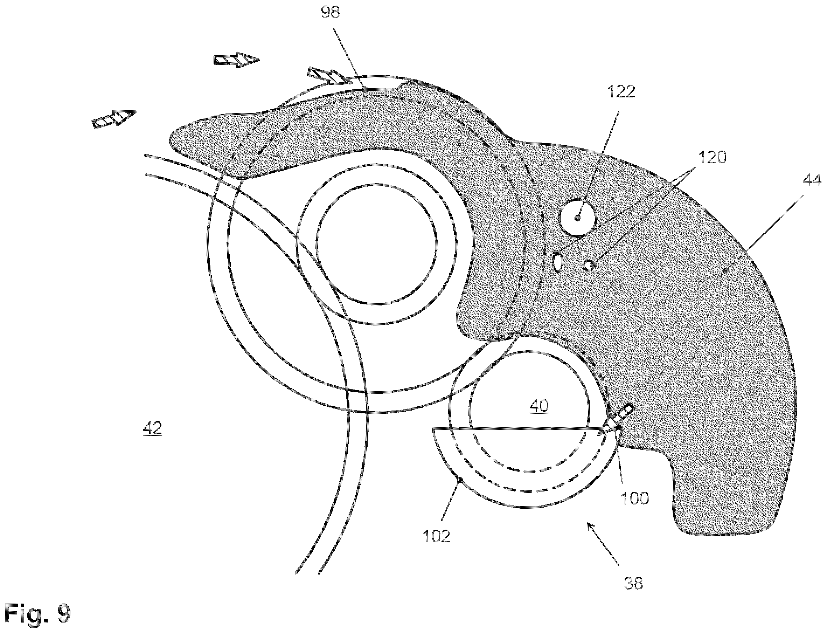

Weiter ist im Getrieberaum 16 ein Ölbehälter 44 angeordnet, auf dessen spezielle Gestaltung weiter unten im Kontext der Figuren 9 bis 14 noch näher eingegangen werden soll.

Im unteren Bereich des Getrieberaums 16 befindet sich ein Getriebeölsumpf 46, in welchen der untere Bereich des Ausgangsrades 42 von oben hineinragt. Bei Rotation nimmt seine Verzahnung Öl aus dem Getriebeölsumpf 46 auf und wirft es in den Ölbehälter 44. Diesen verlässt das Öl wenigstens teilweise über einen Rotorwellen-Auslass 48 und strömt über eine entsprechende Ölleitung in die hohle Rotorwelle 34.

Die hohle Rotorwelle 34 ist beidseitig mit einer Stufe 50 versehen, die die Ausbildung eines Ölsumpfes innerhalb der hohlen Rotorwelle 34 und damit eine Verteilung des Öls über deren axiale Länge grundsätzlich erlaubt. Allerdings kann das Öl die hohle Rotorwelle 34 über Radialöffnungen 52 verlassen. Bei Rotation der Rotorwelle 34 erfolgt dies zentrifugalkraftgetrieben in Form eines Schleuderns des Öls, welches auf diese Weise bei korrekter Positionierung der Radialöffnungen 52 zu den Wickelköpfen 54 des Stators 30 gelangt.

Der beschriebene und nachfolgend noch näher zu beschreibende Weg, den das Öl dabei nimmt, ist in den Figuren als schraffierte Ölförderpfeile angedeutet.

Bei der dargestellten Ausführungsform ist in die Mantelwand 24 des Motorraums 14 ein Kühlwassermantel 56 integriert. Bei der dargestellten Ausführungsform ist er in Form einer Anordnung von im Inneren der Motorraum-Mantelwand 24 umlaufenden Flachrohren ausgebildet. Die Anschlüsse des Kühlwassermantels 56 an ein komplexeres Wasserleitsystem sind als nicht erfindungsrelevant in den Figuren nicht näher dargestellt.

Unterhalb des Motorraums 14 befindet sich, getrennt durch den unteren Teil der Motorraum-Mantelwand 24, ein Labyrinthraum 58, der über Motorraum-Abläufe 60, mit dem Motorraum 14 verbunden ist. Insbesondere kann das auf dem oben geschilderten Weg in den Motorraum 14 gelangte Öl über die Motorraumabläufe 60 in den Labyrinthraum 58 abfließen, ohne dass die Gefahr der Ausbildung eines übermäßig hohen Motorölsumpfes bestünde. Aus Sicherheitsgründen kann, wie in der dargestellten Ausführungsform, vorgesehen sein, dass der Motorraum 14 zusätzlich über einen Motorraum-Überlauf 62 mit dem Getrieberaum 16, insbesondere dem Getriebeölsumpf 46 verbunden ist. Auf diese Weise kann zuverlässig eine Verölung des Luftspaltes 64 zwischen dem Stator 30 und dem Rotor 32 der elektrischen Maschine 28 verhindert werden.

Der Deckel des Labyrinthraums 58, d.h. die Außenseite des unteren Bereichs der Motorraum-Mantelwand 24, ist mit Kühlrippen 66 versehen, die hinreichend tief in den Labyrinthraum 58 hineinragen, um dort von aufgestautem Öl umspült zu werden. Bei einer alternativen Ausführungsform ist die thermische Kopplung zwischen dem Öl im Labyrinthraum 58 und dem Kühlwassermantel 56 nicht nur über die Kühlrippen 66 gegeben, sondern die Motorraum-Mantelwand 24 ragt tiefer in den Labyrinthraum 58 hinein und wird direkt von dem Öl benetzt. Die maximale Höhe des Ölpegels im Labyrinthraum 58 bestimmt sich durch die Höhe eines Labyrinthraum-Überlaufs 68, über welchen der Labyrinthraum 58 mit dem Getrieberaum 16, insbesondere dem Getriebeölsumpf 46 verbunden ist. Über die Kühlrippen 66 kann auf diese Weise ein Wärmeaustausch zwischen dem Kühlwassermantel 56 und dem im Labyrinthraum 58 befindlichen Öl erfolgen, wobei das Öl eine weitere Kühlung dadurch erhält, dass der Boden 70 des Labyrinthraums 58 eine Außenwandung des Gehäuses 12 darstellt, die ihrerseits von Umgebungsluft umströmt wird. Auf diese Weise wir eine besonders effiziente Kühlung des Öls und des Wassers erreicht.

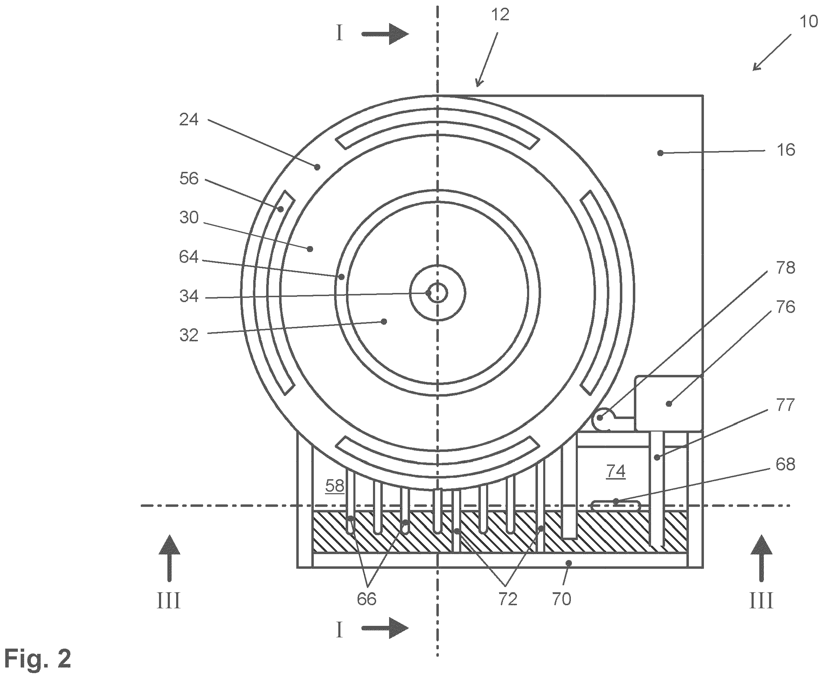

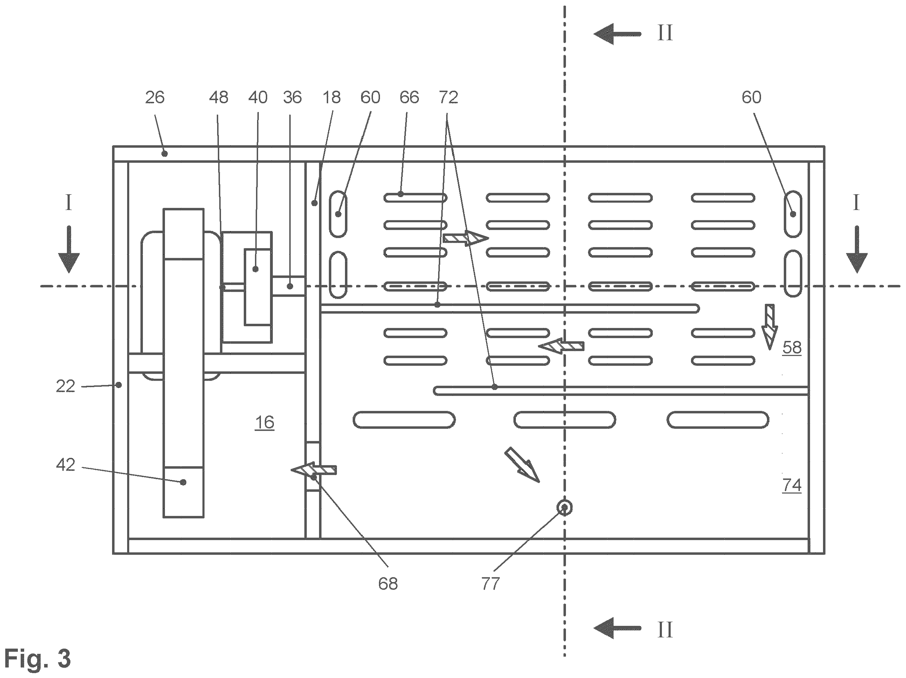

Figur 2 zeigt einen Schnitt entlang der Schnittlinie II-II in Figur 1. Figur 3 zeigt einen Schnitt entlang der Schnittlinie III-III in Figur 1. Diese beiden Darstellungen verdeutlichen, dass der Labyrinthraum 58 mehrere, seine gesamte Höhe durchsetzende Ölleitelemente 72 aufweist, welche das durch die Motorraumabläufe 60 einströmende Öl zu einer mäandrierenden Bewegung zwingen. Hierdurch wir der thermische Kontakt mit den Kühlrippen 66 intensiviert und damit der thermische Austausch verbessert.

Weiter ist in den Figuren 2 und 3 zu erkennen, dass der Labyrinthraum 58 in einen Saugraum 74 einer Ölpumpe 76, deren Saugrüssel 77 in den Saugraum 76 ragt, übergeht. Von hier aus kann Öl bei aktivem Pumpbetrieb an verschiedene schmier- und kühlbedürftige Positionen der Antriebsanordnung 10 gepumpt werden. In Figur 2 ist ein entsprechender, mit der Ölpumpe 76 verbundener Ölverteilerkanal 78 erkennbar, auf den weiter unten noch näher eingegangen werden soll.

Im Übrigen kann überschüssiges Öl aus dem Labyrinthraum 58 bzw. dem Saugraum 74 über den Labyrinthraum-Überlauf 68 in den Getrieberaum 16 und insbesondere den dortigen Getriebeölsumpf 46 gelangen.

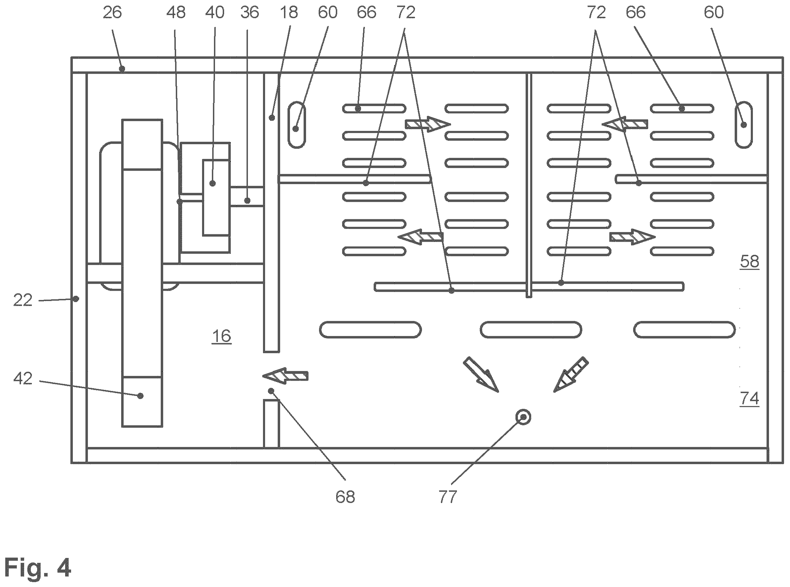

Bei der Ausführungsform von Figur 3 umfasst der Labyrinthraum 58 im Wesentlichen eine einzige Labyrinthraumkammer, in welche beide Motorraum-Abläufe 60 münden. Dies bedeutet, dass Öl, welches aus dem in Figur 3 linken Motorraum-Ablauf 60 in den Labyrinthraum 58 gelangt, am in Figur 3 rechten Motorraum-Ablauf 60 vorbeiströmt und sich dort mit dem durch diesen einströmenden Öl mischt. Hinsichtlich der Dimensionierung muss Sorge getragen werden, dass es bei großen Volumenströmen an dieser Stelle auch in besonders ungünstigen Situationen nicht zu einem Ölstau kommt. Um dies vollständig auszuschließen, ist bei einer Ausführungsform, wie beispielweise in Figur 4 gezeigt, vorgesehen, dass der Labyrinthraum in zwei unterschiedliche Labyrinthraumkammern unterteilt ist, in die je einer der Motorraum-Abläufe 60 mündet. Im Übrigen kann vollumfänglich auf das zuvor Gesagte verwiesen werden.

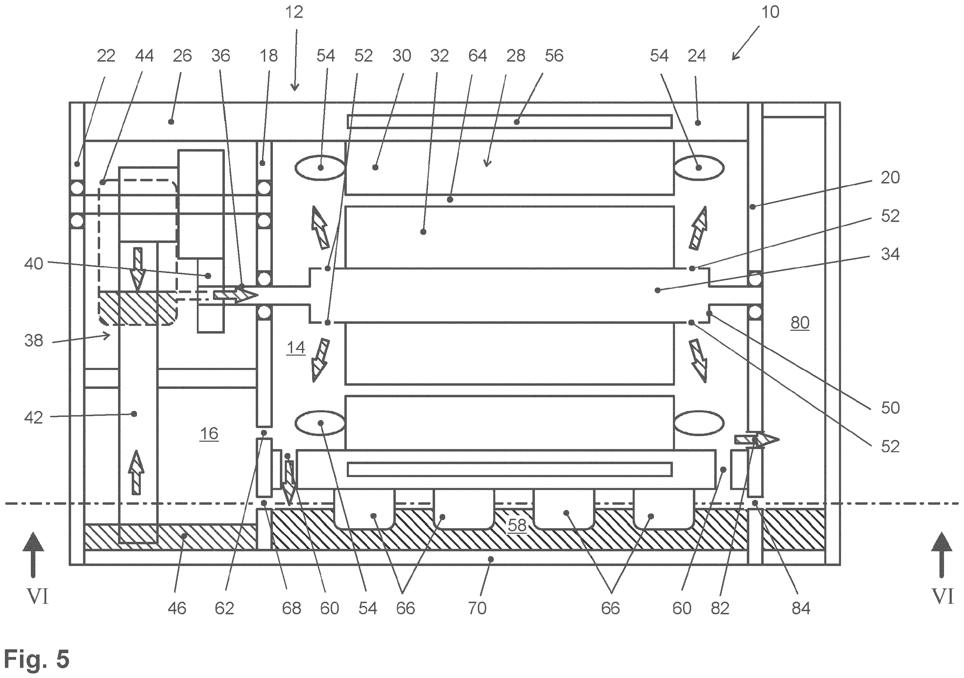

Figur 5 zeigt eine analog Figur 1 aufgebaute Darstellung einer erfindungsgemäßen Ausführungsform der Antriebsanordnung 10. Bei dieser Ausführungsform schließt sich axial benachbart zur äußeren Stirnseite 20 des Motorraums 14, d.h. rechts in Figur 5, ein Deckelraum 80 an, dessen Aufgabe es primär ist, durch die äußere Stirnwand 20 dringendes Öl aufzufangen. Insbesondere wird es nur schwer möglich sein, eine (in den Figuren nicht im Detail dargestellte) Beölung des Rotorwellenlagers in der äußeren Motorraum-Stirnwand 20 sicherzustellen, ohne dass Öl durch das Lager nach außerhalb des Motorraums 14 tritt. Dieses Öl kann im Deckelraum 80 aufgefangen und in der nachfolgend näher erläuterten Weise wieder in den zuvor beschriebenen Ölkreislauf rückgeführt werden. Zudem bietet das Vorhandensein des Deckelraums 80 die Möglichkeit einer gezielten weiteren Nutzung.

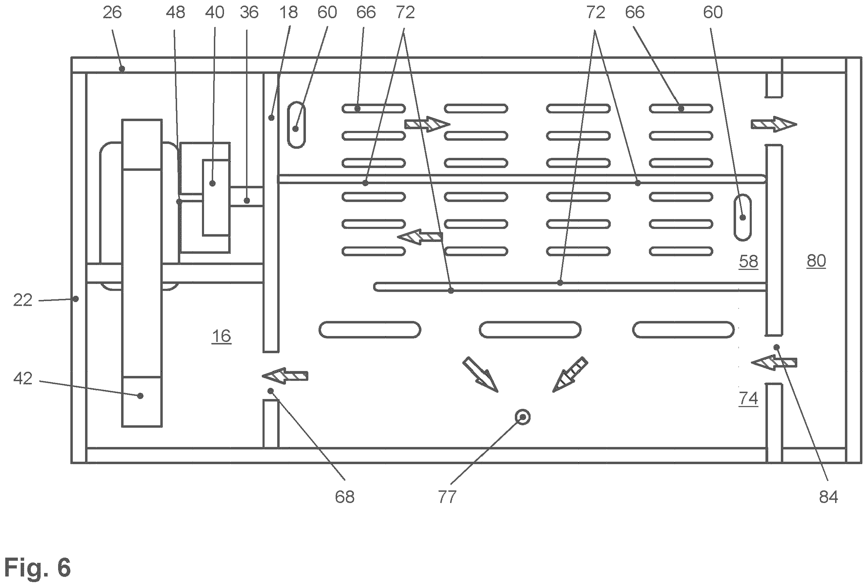

So ist bei der Ausführungsform von Figur 5 vorgesehen, dass sich in der äußeren Motorraum-Stirnwand 20 analog dem Motorraum-Überlauf 62 in der inneren Stirnwand 18 ein weiterer Motorraum-Überlauf 82 befindet, über den Öl aus dem Motorraum 14 in den Deckelraum 80 gelangen kann. Bei der gezeigten Ausführungsform ist der Deckelraum 80 über einen Labyrinthraum-Überlauf 84 mit dem Öl-Reservoir, insbesondere einem dem Labyrinthraum 58 nachgelagerten Vorraum, z.B. dem Saugraum 74, verbunden. Wie in Figur 6 gezeigt, kann dabei, ähnlich der in Figur 4 gezeigten Ausführungsform, der Labyrinthraum 58 in zwei Kammern unterteilt sein. Das durch den getrieberaumseitigen Motorraum-Ablauf 60 in den Labyrinthraum 58 fließende Öl durchströmt bei dieser Ausführungsform nur eine, nämlich die in Figur 6 obere Labyrinthraum-Kammer und umläuft dann durch den Deckelraum 80 die zweite, in Figur 6 untere Labyrinthraum-Kammer. Das durch den deckelraumseitigen Motorraum-Ablauf 60 in den Labyrinthraum 58 fließende Öl hingegen durchströmt nur die andere, nämlich die in Figur 6 untere Labyrinthraum-Kammer. Beide Ölströme vereinigen sich erst in einem dem Labyrinthraum nachgelagerten Raum, z.B. dem Saugraum 74. Ein Ölstau im Labyrinthraum wird dadurch zuverlässig vermieden. Diese Form der Ölumleitung ist auch bei Varianten ohne Deckelraum 80 denkbar. Hier könnten der Ablauf aus der (oberen) Labyrinthraum-Kammer und der Zulauf zum Saugraum über eine entsprechende Leitung verbunden sein. Ebenso ist es denkbar, dass der weitere Motorraum-Überlauf 82 den deckelraumseitigen Motorraum-Ablauf 60 ersetzt.

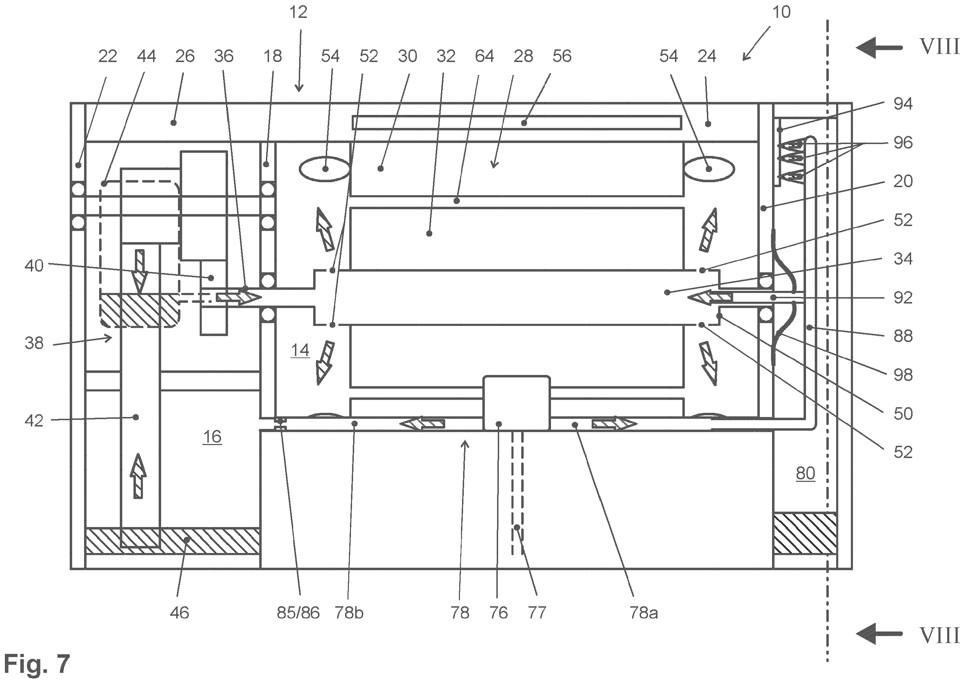

Figur 7 zeigt eine erfindungsgemäße Ausführungsform, bei der der Deckelraum 80 eine alternative oder zusätzliche Nutzung erfährt. Dieser Ausführungsform-Typus setzt zwingend eine Ölpumpe 76 voraus, die Öl aus dem Ölreservoir, insbesondere aus dem Saugraum 74, Öl absaugt und in einen Ölverteilerkanal 78 einspeist. Bei der in Figur 7 dargestellten Ausführungsform verläuft der Ölverteilerkanal 78, wie in Figur 2 erkennbar, im Zwickel zwischen der Motorraum-Mantelwand 24 und dem Deckel des Saugraums 74. Er ist bei der dargestellten Ausführungsform insbesondere in zwei gegenläufige Zweige 78a, 78b unterteilt. Der hier als zweiter Zweig 78b bezeichnete, in Figur 7 linke Zweig des Ölverteilerkanals 78 mündet in den Getrieberaum 16, wobei er eine Verengungsblende 85 passiert, um einen zu starken Abstrom in den Getrieberaum 16 zu verhindern. Der überwiegende Anteil des gepumpten Öls wird daher, wie nachfolgend näher beschreiben, über den ersten Zweig 78a des Ölverteilerkanals abgeführt. Die Verengungsblende 85 im zweiten Zweig 78b des Ölverteilerkanals 78 ist bevorzugt mit einem Magneten 86, insbesondere einem Ringmagneten stromaufwärts benachbart zu ihr ausgestattet, um metallischen Abrieb aus dem Ölkreislauf zu entfernen.

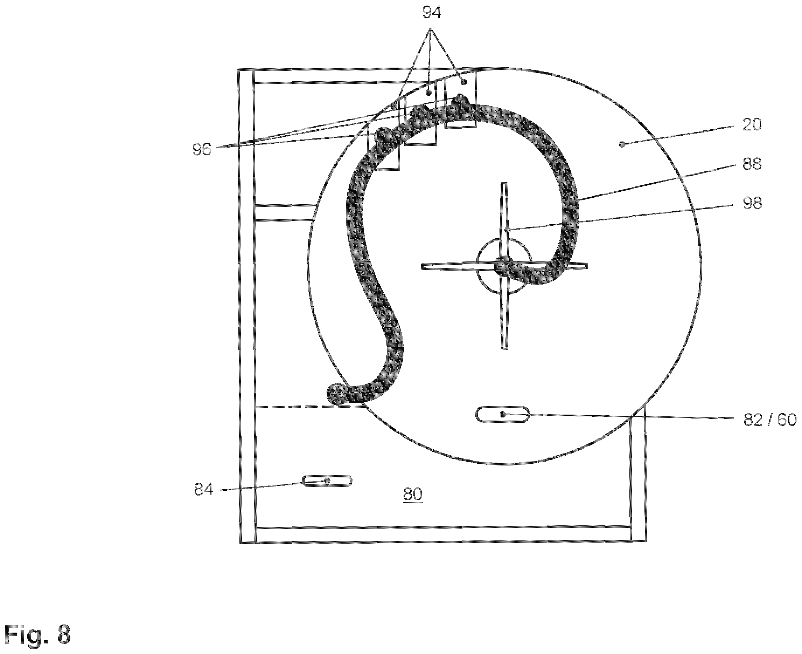

Der erste Zweig 78a des Ölverteilerkanals 78 mündet in den Deckelraum 80, wo an seinem freien Ende ein Ölleitrohr 88 angeschlossen ist. Figur 8 zeigt eine Schnittansicht gemäß Schnittlinie VIII-VIII in Figur 7 und soll nachfolgend gemeinsam mit Figur 7 diskutiert werden. Das Ölleitrohr 88 führt in einem Bogen zu einem Fixierstern 98, der mit seinen Auslegern an der Außenseite der äußeren Motorraum-Stirnwand 20 festgelegt ist. In seinem Zentrum fixiert er ein als Rohrstutzen 92 ausgebildetes Ende des Ölleitrohrs 88, welches in das offene Ende der hohlen Rotorwelle 34 hineinragt. Wie auch an ihrem getrieberaumseitigen Ende ist die hohle Rotorwelle 34 in ihrem Inneren auch hier mit einer Stufe 50 ausgestattet, über welche der Rohrstutzen 92 axial hinüberragt. Folglich wird Öl, das über den zweiten Zweig 78a des Ölverteilerkanals 78 gepumpt wird, direkt in den Innenraum der Rotorwelle 34 gepumpt, wo es zum Aufbau des dortigen Ölsumpfes beiträgt. Bezüglich des weiteren Ölflusses wird auf die obigen Erläuterungen, insbesondere im Kontext von Figur 1 verwiesen.

Bei der in den Figuren 7 und 8 dargestellten Ausführungsformen erfüllt das Ölleitrohr 88 jedoch noch eine weitere Aufgabe. Bei dieser Ausführungsform sind Stromschienen 94 zur Bestromung des Stators 30 abschnittsweise durch den Deckelraum 80 geführt. Das Ölleitrohr 88 beschreibt im Deckelraum 80 einen Bogen, der es nahe an diesen Stromschienen 94 vorbeiführt. Im Bereich der größten Annäherung weist die Seitenwand des Ölleitrohres 88 Düsenöffnungen 96 auf, aus denen Öl auf die Stromschienen gespritzt wird, um diese zu kühlen. Die Dimensionierung der Düsenöffnungen 96 erfolgt, wie der Fachmann erkennen wird, vorzugsweise so, dass bei dem von der Ölpumpe 76 vorgegebenen Öldruck im Ölleitrohr 88 eine kontinuierliche, hinreichende Spülung der Stromschienen 96 erfolgen kann, wobei jedoch noch genug Öl im Ölleitrohr 88 verbleibt, um in die hohle Rotorwelle 34 zu deren Kühlung gepumpt zu werden.

Figur 9 zeigt eine besonders bevorzugte Ausführungsform des Ölbehälters 44 in seiner Montageendlage im Getriebe 38. Von letzterem sind vorliegend insbesondere das Antriebsritzel 40 und das Ausgangsrad 42 von Bedeutung.

Wie im Kontext von Figur 1 beschreiben, ist das Ausgangsrad 42 in einen in Figur 9 nicht dargestellten Getriebeölsumpf 46 eingetaucht, sodass seine Verzahnung bei Rotation Öl aufnimmt und, wie durch die schraffierten Ölförderpfeile illustriert, in eine Einlassöffnung 98 geworfen wird. Der Ölbehälter 44 weist in seiner Seitenwand eine Mehrzahl von Abflüssen auf, auf die weiter unten noch näher eingegangen werden soll. Hier soll lediglich auf den mit einem Ölförderpfeil markierten Getriebeölsumpf-Auslass 100 hingewiesen werden, der einen Ablauf von Öl aus dem Ölbehälter 44 in eine Antriebsritzel-Wanne 102 erlaubt. Die Antriebsritzel-Wanne 102 ist unterhalb des Antriebsritzels 40 so angeordnet, dass dieses bereichsweise in sie eintaucht, sodass sein unterer Bereich von einem in der Antriebsritzel-Wanne aufgestauten Ölsumpf benetzt ist. Der Getriebeölsumpf-Auslass 100 stellt den tiefstgelegenen Ölauslass des Ölbehälters 44 dar, der dessen maximales Entleeren in den Getriebeölsumpf auf dem Weg über die zum Getriebeölsumpf 46 hin überlaufende Antriebsritzel-Wanne 102 ermöglicht. Hierdurch ist dafür gesorgt, dass auch nach langen Standzeiten das Antriebsritzel 40 wenigstens bereichsweise beölt bleibt, sodass eine verschleißmindernde Beölung sämtlicher Verzahnungen des Getriebes 38 in kürzester Zeit nach dem Neustart der Antriebsanordnung einsetzt.

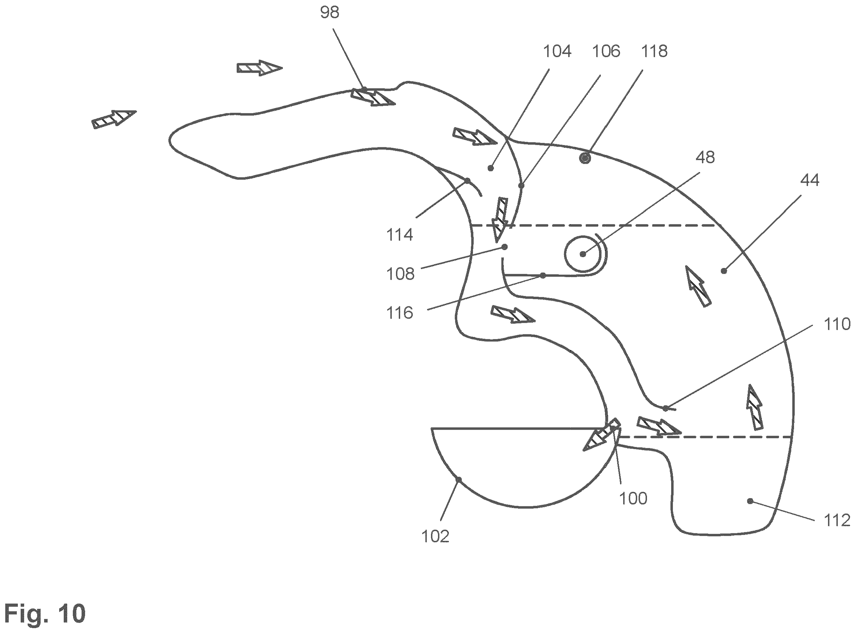

Figur 10 zeigt einen Schnitt durch den Ölbehälter 44 von Figur 9 im hier als Starkströmungsbetrieb bezeichneten Normalbetrieb. Insbesondere ist die Innenseite der Behälterwand des Ölbehälters 44 mit Blickrichtung aus dem Motorraum illustriert. Die Einlassöffnung 98 geht in einen Einlasskanal 104 über, der im Wesentlichen vertikal orientiert ist. Seine der Einlassöffnung 98 gegenüberliegende Kanalwand ist als eine konkav gekrümmte Prallwand 106 ausgebildet, gegen welche im Starkströmungsbetrieb eingeschleudertes Öl prallt und in vergleichsweise starkem Strom nach unten abfließt. Durch eine weiter unten noch näher diskutierte Durchlassöffnung 108 in der Prallwand 106 fließt lediglich ein geringer Anteil dieses Öl-Hauptstroms ab. Der hauptsächliche Anteil des Ölstroms umströmt das untere freie Ende 110 der Prallwand 106 und steigt hinter ihr wieder auf. Insbesondere bei Erreichen eines Ölpegels entsprechend der in Figur 10 oberen gestrichelten Pegellinie kann Öl durch den Rotorwellen-Auslass 48 in der Wand des Ölbehälters 44 nach außen und über eine entsprechend angeschlossene Leitung ins Innere der hohlen Rotorwelle 34 strömen, wie bereits im Kontext von Figur 1 erläutert. Zugleich kann Öl durch den Getriebeölsumpf-Auslass 100 und die Antriebsritzel-Wanne 102 in den Getriebeölsumpf 46 gelangen. Lediglich eine abflusslose Tasche 112 unterhalb des Getriebeölsumpf-Auslasses 100 beherbergt dauerhaft einen behälterinternen Ölsumpf, der sich insbesondere zum Abscheiden von Schmutz eignet. Die in Figur 10 untere gestrichelte Pegellinie illustriert den Ölpegelstand im Ölbehälter 44 nach maximaler Entleerung.

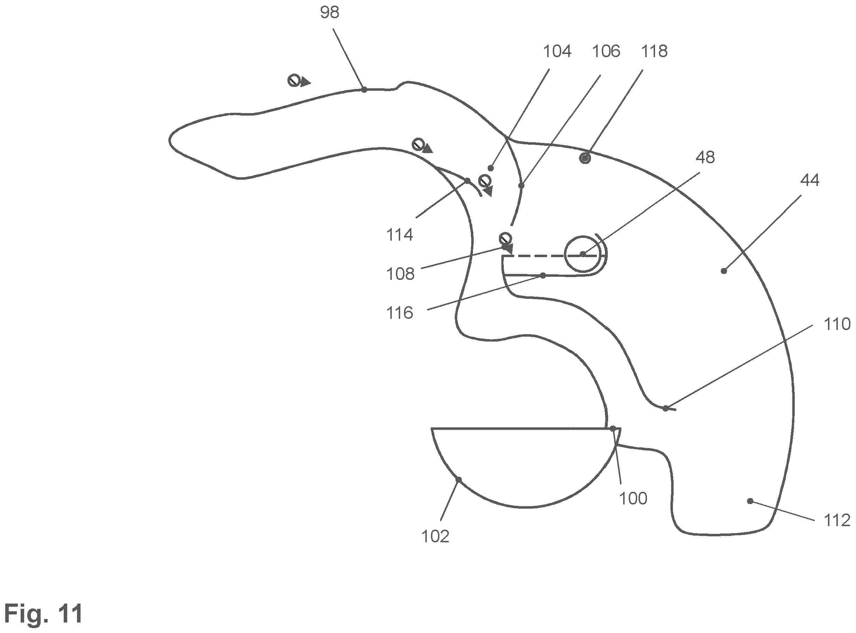

Figur 11 zeigt den gleichen Schnitt durch den Ölbehälter 44 wie Figur 10, allerdings nicht bei Starkströmungsbetrieb, sondern in einem Schwachströmungsbetrieb bei sehr langsamem Betrieb der Antriebsanordnung 10 bzw. unmittelbar nach deren Start. Entsprechend gering ist der Ölfluss, wie durch die modifizierten Ölförderpfeile in Figur 11 gegenüber Figur 10 angedeutet. Das lediglich rinnsal- oder tropfenartig geförderte Öl gelangt nicht bis zur Prallwand 106 sondern fließt an der dieser gegenüberliegenden Kanalwand ab. Unterhalb der Einlassöffnung 98 ist diese Kanalwand daher mit einem Ölleitvorsprung 114 ausgestattet, der schräg oberhalb des Durchlasses 108 endet, sodass an seiner Kante abtropfendes oder ablaufendes Öl durch besagten Durchlass 108 auf die Rückseite der Prallwand 106 fließt. Dort wird es von einem wannenartigen Zwischenboden 116 aufgefangen, der es unmittelbar zum Rotorwellen-Auslass 48 leitet. Dies bedeutet also, dass bereits bei sehr geringem, langsamem Ölfluss eine Beölung des Rotorwellen-Innenraums möglich ist und nicht erst das zuvor beschriebene Ansteigen des Ölpegels um das untere, freie Ende 110 der Prallwand 106 herum abgewartet werden muss. Der Vollständigkeit halber sei noch auf eine Entlüftungsöffnung 118 im oberen, oberhalb jedes bei Normalbetrieb denkbaren Ölpegels im Behälter 44 hingewiesen.

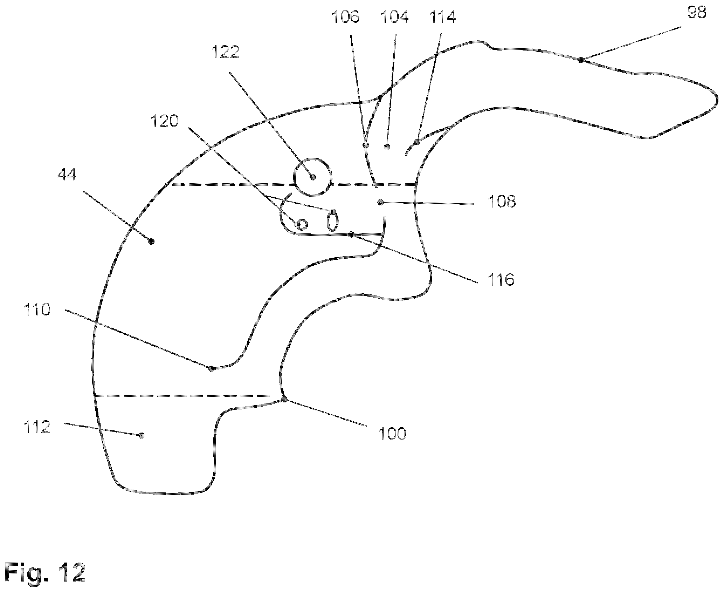

Figur 12 zeigt ebenfalls einen Schnitt durch den Ölbehälter 44, illustriert allerdings mit Blickrichtung in den Motorraum 14. Unmittelbar oberhalb des Zwischenbodens 116 sind zwei unterschiedlich dimensionierte Lager-Auslässe 120 sowie, weiter oberhalb, ein Not-Auslass 122 zum Motorraum 14 angeordnet. Durch die Lager-Auslässe 120 an der bezeichneten Stelle ist sichergestellt, dass neben der Rotorwellen-Kühlung auch die Schmierung wesentlicher Lager, die über nicht im Detail dargestellte Ölleitsysteme mit den Lager-Auslässen 120 verbunden sind, auch bei langsamem Betrieb oder unmittelbar nach einem Start der Antriebsanordnung 10 gewährleistet ist.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Antriebsanordnung
- 12: Gehäuse
- 14: Motorraum
- 16: Getrieberaum
- 18: innere Stirnwand
- 20: äußere Stirnwand des Motorraums 14
- 22: äußere Stirnwand des Getrieberaums 16
- 24: Mantelwand des Motorraums 14
- 26: Mantelwand des Getrieberaums 16
- 28: elektrische Maschine
- 30: Stator
- 32: Rotor
- 34: Rotorwelle
- 36: Antriebswelle
- 38: Getriebe
- 40: Antriebsritzel
- 42: Ausgangsrad
- 44: Ölbehälter
- 46: Getriebeölsumpf
- 48: Rotorwellen-Auslass
- 50: Stufe
- 52: Radialöffnung der Rotorwelle
- 54: Wickelkopf des Stators
- 56: Kühlwassermantel
- 58: Labyrinthraum
- 60: Motorraum-Ablauf
- 62: Motorraum-Überlauf
- 64: Luftspalt
- 66: Kühlrippe
- 68: Labyrinthraum-Überlauf
- 70: Boden des Labyrinthraums
- 72: Ölleitelement
- 74: Saugraum
- 76: Ölpumpe
- 78: Ölverteilerkanal
- 78a: erster Zweig von 78
- 78b: zweiter Zweig von 78
- 80: Deckelraum
- 82: weiterer Motorraum-Überlauf
- 84: Labyrinthraum-Überlauf
- 85: Verengungsblende
- 86: Ringmagnet
- 88: Ölleitrohr
- 90: Fixierstern
- 92: Rohrstutzen
- 94: Stromschiene
- 96: Düsenöffnung
- 98: Einlassöffnung des Ölbehälters 44
- 100: Getriebeölsumpf-Auslass
- 102: Antriebsritzel-Wanne
- 104: Einlasskanal
- 106: Prallwand
- 108: Durchlass in 106
- 110: freies Ende von 106
- 112: Tasche
- 114: Ölleitvorsprung
- 116: Zwischenboden
- 118: Entlüftungsöffnung
- 120: Lager-Auslass
- 122: Motorraum-(Not-)Auslass

## Patentansprüche

1. Antriebsanordnung (10) für ein Kraftfahrzeug, umfassend
- ein Gehäuse (12) mit einem Motorraum (14) und einem an den Motorraum (14) angrenzenden, über eine innere Stirnwand (18) von diesem abgegrenzten Getrieberaum (16), jeweils begrenzt durch besagte innere Stirnwand (18), eine zugeordnete äußere Stirnwand (20, 22) und eine sich in axialer Richtung zwischen der inneren und der zugeordneten äußeren Stirnwand (18; 20, 22) erstreckende Mantelwand (24, 26),
- eine in dem Motorraum (14) angeordnete elektrische Maschine (28) mit einem gehäusefesten Stator (30) und einem radial innerhalb des Stators (30) angeordneten Rotor (32) mit einer die innere Stirnwand (18) durchsetzenden, im Motorraum (14) drehbar gelagerten Rotorwelle (34) und
- ein in dem Getrieberaum (16) angeordnetes Getriebe (38) mit einem auf der hier als Antriebswelle (36) wirkenden Rotorwelle (34) fixierten Eingangsritzel (40) und einem mit einem Abtrieb verbindbaren oder verbundenen Ausgangsrad (42) und
- ein Ölreservoir, aus dem Öl über ein Ölzuleitsystem zwecks Kühlung zu der elektrischen Maschine (28), insbesondere zur Rotorwelle (34), und über ein Ölableitsystem von dieser zurück in das Ölreservoir leitbar ist,
wobei die Mantelwand (24) des Motorraums (14) zur zusätzlichen Kühlung der elektrischen Maschine (28) einen den Stator (30) entlang dessen Umfangs umlaufenden Kühlwassermantel (56) aufweist.
und wobei zumindest ein Teil des Ölreservoirs als ein unterhalb des Motorraumes (14) angeordneter Ölraum ausgebildet ist, dessen Oberseite thermisch mit dem Kühlwassermantel (56) gekoppelt ist und in den stirnwandnahen, axialen Endbereichen des Motorraumes (14) je ein in den Ölraum mündender Motorraum-Ablauf (60) angeordnet ist,
**dadurch gekennzeichnet,**
**dass** der Ölraum als ein Labyrinthraum (58) ausgebildet ist und axial benachbart zur äußeren Stirnwand (20) des Motorraums (14) ein Deckelraum (80) angeordnet ist, der über einen Labyrinthraum-Überlauf (84) mit dem Labyrinthraum (58) verbunden ist, wobei sich in der äußeren Stirnwand (20) ein Motorraum-Überlauf (82) befindet, über den Öl aus dem Motorraum (14) in den Deckelraum (80) gelangen kann und der höher angeordnet ist als die Motorraum-Abläufe (60).

2. Antriebsanordnung (10) nach Anspruch 1,
**dadurch gekennzeichnet,**
**dass** die Unterseite (70) des Labyrinthraums (58) einen Außenwandungsbereich der Antriebsanordnung darstellt.

3. Antriebsanordnung (10) nach einem der vorangehenden Ansprüche,
**dadurch gekennzeichnet,**
**dass** die Außenseite der Motorraum-Mantelwand (24) im Grenzbereich zum Labyrinthraum (58) in den Labyrinthraum (58) hineinragende, umströmbare Kühlrippen (66) aufweist.

4. Antriebsanordnung (10) nach einem der vorangehenden Ansprüche,
**dadurch gekennzeichnet,**
**dass** die Rotorwelle (34) hohl ausgebildet ist und dass Öl über das Ölzuleitsystem in die hohle Rotorwelle (34) hinein und über das Ölableitsystem aus der hohlen Rotorwelle (34) in das Ölreservoir leitbar ist.

5. Antriebsanordnung (10) nach Anspruch 4,
**dadurch gekennzeichnet,**
**dass** die hohle Rotorwelle (34) in ihren stirnwandnahen, axialen Endbereichen innerhalb des Motorraums (14) Radialöffnungen (52) aufweist, durch die hindurch bei Rotation des Rotors (32) Öl aus dem hohlen Inneren der Rotorwelle (34) auf die axialen Endbereiche des Stators (30) schleuderbar ist.

6. Antriebsanordnung (10) nach einem der vorangehenden Ansprüche,
**dadurch gekennzeichnet,**
**dass** die beiden Motorraum-Abläufe (60) in einer gemeinsamen Labyrinthraum-Kammer münden.

7. Antriebsanordnung (10) nach einem der Ansprüche 1 bis 5,
**dadurch gekennzeichnet,**
**dass** der Labyrinthraum (58) zwei getrennte Labyrinthraum-Kammern aufweist, in die je einer der beiden Motorraum-Abläufe (60) mündet.

8. Antriebsanordnung (10) nach Anspruch 6 oder 7,
**dadurch gekennzeichnet,**
**dass** der Labyrinthraum (58) einen Labyrinthraum-Überlauf (68) zum Getriebeölsumpf aufweist.

9. Antriebsanordnung (10) nach einem der Ansprüche 6 bis 8,
**dadurch gekennzeichnet,**
**dass** jede Labyrinthraum-Kammer fluidisch mit einem Saugraum (74) einer Ölpumpe (76) verbunden ist.

10. Antriebsanordnung (10) nach einem der vorangehenden Ansprüche,
dass der Motorraum (14) einen die innere Stirnwand (18) durchsetzenden Motorraum-Überlauf (62) zum Getriebeölsumpf (46) aufweist, der höher angeordnet ist als die Motorraum-Abläufe (60).

## Claims

1. Drive assembly (10) for a motor vehicle, comprising:
- a housing (12) having an engine compartment (14) and a transmission compartment (16) which adjoins the engine compartment (14) and is delimited therefrom by means of an inner bulkhead (18), and which is in each case delimited by said inner bulkhead (18), an associated outer bulkhead (20, 22) and a casing wall (24, 26) extending in the axial direction between the inner and the associated outer bulkhead (18; 20, 22),
- an electrical machine (28) which is arranged in the engine compartment (14) and has a stator (30) which is fastened to the housing and a rotor (32) which is arranged radially within the stator (30) and has a rotor shaft (34) which passes through the inner bulkhead (18) and is rotatably mounted in the engine compartment (14), and
- a transmission (38) which is arranged in the transmission compartment (16) and has an input pinion (40) which is fixed on the rotor shaft (34), which here acts as a drive shaft (36), and an output wheel (42) which is or can be connected to a drive, and
- an oil reservoir from which oil can be conducted, for the purpose of cooling, via an oil supply system to the electrical machine (28), in particular to the rotor shaft (34), and from there via an oil discharge system back into the oil reservoir,
the casing wall (24) of the engine compartment (14) comprising a cooling water jacket (56) surrounding the stator (30) along its circumference for additional cooling of the electrical machine (28),
and at least a portion of the oil reservoir being designed as an oil chamber arranged below the engine compartment (14), the upper side of which oil chamber is thermally coupled to the cooling water jacket (56), and one engine compartment outlet (60), which opens into the oil chamber, being arranged in each of the axial end regions of the engine compartment (14) close to the bulkhead,
**characterized in that,**
the oil chamber is designed as a labyrinth space (58) and a cover space (80) is arranged axially adjacently to the outer bulkhead (20) of the engine compartment (14), which cover space is connected to the labyrinth space (58) via a labyrinth space overflow (84),
an engine compartment overflow (82) being located in the outer bulkhead (20), via which oil can pass from the engine compartment (14) into the cover space (80) and which is arranged higher than the engine compartment outlets (60).

2. Drive assembly (10) according to claim 1,
**characterized in that**
the underside (70) of the labyrinth space (58) is an outer wall region of the drive assembly.

3. Drive assembly (10) according to either of the preceding claims, **characterized in that**
the outside of the engine compartment casing wall (24) has cooling ribs (66) in the boundary region to the labyrinth space (58), which ribs project into the labyrinth space (58).

4. Drive assembly (10) according to any of the preceding claims, **characterized in that**
the rotor shaft (34) is hollow **and in that** oil can be conducted into the hollow rotor shaft (34) via the oil supply system, and can be conducted out of the hollow rotor shaft (34) and into the oil reservoir via the oil discharge system.

5. Drive assembly (10) according to claim 4,
**characterized in that**
the hollow rotor shaft (34) comprises radial openings (52) in its axial end regions within the engine compartment (14) that are close to the bulkhead, through which radial openings oil can be thrown from the hollow interior of the rotor shaft (34) onto the axial end regions of the stator (30) during rotation of the rotor (32).

6. Drive assembly (10) according to any of the preceding claims, **characterized in that**
the two engine compartment outlets (60) open into a common labyrinth space chamber.

7. Drive assembly (10) according to any of claims 1 to 5,
**characterized in that**
the labyrinth space (58) has two separate labyrinth space chambers into which one of the two engine compartment outlets (60) opens in each case.

8. Drive assembly (10) according to either claim 6 or claim 7,
**characterized in that**
the labyrinth space (58) comprises a labyrinth space overflow (68) to the transmission oil sump.

9. Drive assembly (10) according to any of claims 6 to 8,
**characterized in that**
each labyrinth space chamber is fluidically connected to a suction chamber (74) of an oil pump (76).

10. Drive assembly (10) according to any of the preceding claims,
that the engine compartment (14) comprises an engine compartment overflow (62) that passes through the inner bulkhead (18) to the transmission oil sump (46), which engine compartment overflow is arranged higher than the engine compartment outlets (60).

## Revendications

1. Agencement d'entraînement (10) pour un véhicule automobile, comprenant
- un boîtier (12) comportant un compartiment moteur (14) et un compartiment de transmission (16) adjacent au compartiment moteur (14) et délimité par rapport à celui-ci par une paroi frontale interne (18), respectivement délimité par ladite paroi frontale interne (18), une paroi frontale externe (20, 22) associée et une paroi et une paroi d'enveloppe (24, 26) s'étendant dans la direction axiale entre la paroi frontale interne et la paroi frontale externe associée (18 ; 20, 22),
- une machine électrique (28) disposée dans le compartiment moteur (14) comportant un stator (30) solidaire du boîtier et un rotor (32) disposé radialement à l'intérieur du stator (30) comportant un arbre de rotor (34) traversant la paroi frontale interne (18) et placé de manière à pouvoir tourner dans le compartiment moteur (14) et
- une transmission (38) disposée dans le compartiment de transmission (16) comportant un pignon d'entrée (40) fixé sur l'arbre de rotor (34) agissant ici comme un arbre d'entraînement (36) et une roue de sortie (42) pouvant être reliée ou reliée à une sortie et
- un réservoir d'huile, à partir duquel de l'huile peut être acheminée vers la machine électrique (28), en particulier vers l'arbre de rotor (34), à des fins de refroidissement, par l'intermédiaire d'un système d'alimentation en huile et peut être renvoyée de celle-ci par l'intermédiaire d'un système d'évacuation d'huile vers le réservoir d'huile,
dans lequel la paroi d'enveloppe (24) du compartiment moteur (14) présente, pour le refroidissement supplémentaire de la machine électrique (28) une enveloppe d'eau de refroidissement (56) entourant le stator (30) le long de sa circonférence.
et dans lequel au moins une partie du réservoir d'huile est conçue comme un compartiment d'huile disposé au-dessous du compartiment moteur (14), dont la face supérieure est couplée thermiquement avec l'enveloppe d'eau de refroidissement (56) et une évacuation (60) de compartiment moteur débouchant dans le compartiment d'huile est disposée dans chacune des zones d'extrémité axiales du compartiment moteur (14) proches de la paroi frontale,
**caractérisé en ce que**
le compartiment d'huile est conçu comme un compartiment de labyrinthe (58) et un compartiment de capot (80) est disposé adjacent axialement à la paroi frontale externe (20) du compartiment moteur (14), lequel compartiment de capot est relié par l'intermédiaire d'un déversoir (84) de compartiment de labyrinthe avec le compartiment de labyrinthe (58),
dans lequel un déversoir (82) de compartiment moteur se trouve dans la paroi frontale externe (20), déversoir par l'intermédiaire duquel de l'huile provenant du compartiment moteur (14) peut être amenée dans le compartiment de capot (80) et qui est disposé plus haut que les déversoirs (60) de compartiment moteur.

2. Agencement d'entraînement (10) selon la revendication 1,
**caractérisé en ce que**
la face inférieure (70) du compartiment de labyrinthe (58) représente une zone de paroi externe de l'agencement d'entraînement.

3. Agencement d'entraînement (10) selon l'une des revendications précédentes,
**caractérisé en ce que**
la face externe de la paroi d'enveloppe (24) de compartiment moteur présente dans la zone limite avec le compartiment de labyrinthe (58) des ailettes de refroidissement (66) pouvant être contournées et faisant saillie dans le compartiment de labyrinthe (58).

4. Agencement d'entraînement (10) selon l'une des revendications précédentes,
**caractérisé en ce que**
l'arbre de rotor (34) est conçu creux **et que** de l'huile peut être acheminée, par l'intermédiaire du système d'alimentation en huile, dans l'arbre de rotor (34) creux et, par l'intermédiaire du système d'évacuation en huile, hors de l'arbre de rotor (34) creux dans le réservoir d'huile.

5. Agencement d'entraînement (10) selon la revendication 4,
**caractérisé en ce que**
l'arbre de rotor (34) creux présente, dans ses zones d'extrémité axiales proches de la paroi frontale à l'intérieur du compartiment moteur (14), des ouvertures radiales (52), à travers lesquelles, lors de la rotation du rotor (32), de l'huile peut être projetée depuis l'intérieur creux de l'arbre de rotor (34) sur les zones d'extrémité axiales du stator (30).

6. Agencement d'entraînement (10) selon l'une des revendications précédentes,
**caractérisé en ce que**
les deux déversoirs (60) de compartiment moteur débouchent dans une chambre de compartiment de labyrinthe commune.

7. Agencement d'entraînement (10) selon l'une des revendications 1 à 5, **caractérisé en ce que**
le compartiment de labyrinthe (58) présente deux chambres de compartiment de labyrinthe séparées, dans lesquelles respectivement un des deux déversoirs (60) de compartiment moteur débouche.

8. Agencement d'entraînement (10) selon la revendication 6 ou 7, **caractérisé en ce que**
le compartiment de labyrinthe (58) présente un débordement (68) de compartiment de labyrinthe vers le carter d'huile de transmission.

9. Agencement d'entraînement (10) selon l'une des revendications 6 à 8, **caractérisé en ce que**
chaque chambre de compartiment de labyrinthe est reliée fluidiquement à un compartiment d'aspiration (74) d'une pompe à huile (76).

10. Agencement d'entraînement (10) selon l'une des revendications précédentes,
que le compartiment moteur (14) présente un débordement (62) de compartiment moteur traversant la paroi frontale interne (18) vers le carter d'huile de transmission (46), qui est disposé plus haut que les déversoirs (60) de compartiment moteur.
